Europäisches Patentamt

**European Patent Office**

**Office européen des brevets**

(11) Numéro de publication: **0 019 503**
**B1**

(12)

# FASCICULE DE BREVET EUROPEEN

(45) Date de publication du fascicule du brevet: **23.06.82**

(51) Int. Cl.³: **G 11 B 27/30, H 04 N 5/76**

(21) Numéro de dépôt: **80400525.4**

(22) Date de dépôt: **18.04.80**

(54) **Procédé de codage de signaux binaires de numérotation d'images emmagasinées sur un support d'enregistrement, dispositif de lecture des signaux ainsi codés et appareil de diffusion de signaux audiovisuels comportant un tel dispositif.**

(30) Priorité: **10.05.79 FR 7911853**

(43) Date de publication de la demande:
**26.11.80 Bulletin 80/24**

(45) Mention de la délivrance du brevet:
**23.06.82 Bulletin 82/25**

(84) Etats contractants désignés:
**DE GB IT NL SE**

(56) Documents cités:
**FR - A - 2 360 221**
**FR - A - 2 361 029**
**FR - A - 2 376 486**
**FR - A - 2 384 405**
**US - A - 4 000 510**

(73) Titulaire: **THOMSON-BRANDT**
**173, Boulevard Haussmann**
**F-75360 Paris Cedex 08 (FR)**

(72) Inventeur: **Oprandi, Pierre**
**"THOMSON-CSF" - SCPI 173, bld Haussmann**
**F-75360 Paris Cedex 08 (FR)**
Inventeur: **Romeas, René**
**"THOMSON-CSF" - SCPI 173, bld Haussmann**
**F-75360 Paris Cedex 08 (FR)**

(74) Mandataire: **Lepercque, Jean et al,**
**THOMSON-CSF SCPI 173, Bld Haussmann**
**F-75360 Paris Cedex 08 (FR)**

Procédé de codage de signaux binaires de numérotation d'images emmagasinées sur un
support d'enregistrement, dispositif de lecture des signaux ainsi codés et appareil de diffusion
de signaux audiovisuels comportant un tel dispositif

La présente invention se rapporte à un procédé de codage de signaux binaires de numérotation d'images emmagasinées sur un support d'enregistrement, notamment un vidéodisque, et le dispositif de lecture des signaux ainsi codés.

Il est bien connu d'enregistrer sur un support, des signaux de télévision qui comportent habituellement une composante vidéo et une composante sonore. Les signaux de télévision enregistrés sont issus de l'analyse d'images en une ou plusieurs trames, chaque image étant par exemple composée d'un nombre impair de lignes réparties en deux trames: 625 lignes en Europe. Les systèmes européens de télévision fonctionnent avec une fréquence de 50 trames par seconde. L'analyse des images s'effectue selon deux trames entrelacées, ce qui donne 25 images par seconde. D'autres systèmes utilisés notamment aux Etats-Unis, comme le NTSC, fonctionnent avec une fréquence de 60 trames par seconde.

On enregistre également pendant les intervalles de retour de ligne et d'image, des signaux de service tels que des signaux de synchronisation. Les intervalles de retour de trame peuvent en outre comporter des signaux binaires de numérotation d'image. Ces informations sont utilisées au cours de processus de lecture, d'une part, pour retrouver une image prédéterminée, et d'autre part, pour obtenir certains effets spéciaux, tels que arrêt sur image, ralenti ou accéléré.

Sur un vidéodisque, les images sont enregistrées sur une piste en spirale ou en cercles concentriques. Dans les standards de fréquence 50 trames par seconde, sur chaque spire de la piste est enregistrée une image complète. C'est à dire pour chaque révolution du vidéodisque on peut lire une image complète ou deux trames. L'arrêt sur image peut s'effectuer simplement par saut d'une piste à la précédente après une révolution du vidéodisque. Ce n'est plus possible pour un standard de fréquence 60 trames par seconde car chaque image peut comprendre trois trames ce qui correspond à un tour et demi du vidéodisque.

Dans la demande de brevet français N° 77 000 79, déposée le 4 Janvier 1977 et publiée sous le numéro 2 376 486, il a été proposé un dispositif permettant d'effectuer un arrêt sur image correct quel que soit le procédé utilisé pour l'enregistrement de ces images sur le disque; SECAM ou PAL, 50 Hz, 625 lignes; ou NTSC, 60 Hz, 525 lignes. A chaque trame est associé un numéro, codé sous forme binaire. Les numéros associés aux trames d'une même image sont identiques. D'une image à la suivante, seul le bit de poids le plus faible va donc varier. Le système générature d'impulsions de saut décrit dans le demande de brevet précitée utilise cette variation pour déterminer si la trame lue est issue ou non de la même image que la trame lue précédemment. Pour que le fonctionnement de ce dispositif soit correct, il faut donc s'assurer qu'aucune erreur de lecture ou altération quelconque ne rende impossible la restitution du numéro d'image affecté à l'une des trames et même éventuellement aux deux ou trois trames constituant l'image sur laquelle on désire effectuer un arrêt. Il suffit d'ailleurs que l'erreur affecte le bit de plus faible poids du numéro d'image pour que le fonctionnement du dispositif soit perturbé.

Pour pallier ces inconvénients, l'invention a donc pour objet un procédé de codage des signaux binaires de numérotation, d'images destinées à être emmagasinées sur un support d'enregistrement, les signaux binaires se présentant sous la forme d'un train de bits en série; procédé visant à prémunir les signaux binaires contre les altérations rencontrées au cours du processus de transcription, principalement caractérisé en ce qu'il consiste à répéter le bit de poids le plus faible plusieurs fois et réémettre le train redondant de bits en série ainsi obtenu à plusieurs reprises; les bits d'une partie des ces trains redondants étant en outre inversés.

L'invention a également pour objet un dispositif lecteur de signaux binaires de numérotation d'images codés selon ce procédé et l'application à un appareil de diffusion de signaux audiovisuels comportant un générateur d'impulsions de commandes de saut de piste.

L'invention sera mieux comprise au moyen de la description ci-après et des figures annexées parmi lesquelles:

— la figure 1 représente un agencement de signaux de télévision enregistrés sur un disque;
— la figure 2 illustre le codage du numéro d'image enregistré selon deux standards différents;
— la figure 3 est une courbe illustrant la fréquence d'apparition de défauts en fonction de leur durée;
— la figure 4 est un codeur de numéro d'image selon le procédé de l'invention;
— les figures 5 et 6 sont des diagrammes illustrant deux aspects de l'invention;
— la figure 7 est un dispositif de lecture de numéro d'image selon l'invention.

Dans ce qui suit, à titre d'illustration, seul le cas particulier d'un lecteur de vidéodisque à tête de lecture optique est décrit, sans que la portée de l'invention en soit limitée pour autant.

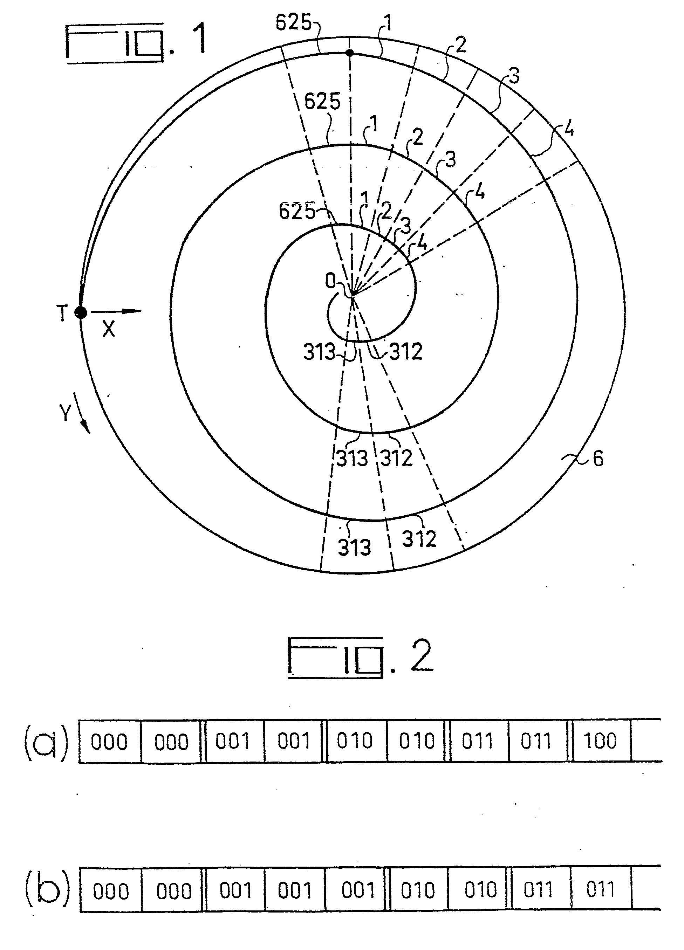

La figure 1 décrit schématiquement un agencement de signaux de télévision enregistrés sur une des faces d'un support d'enregistrement 6 en forme de disque, l'enregistrement s'effectuant suivant une piste en spirale. La face du disque est partagée en 625 secteurs angulaires égaux par des rayons en pointillé, issus du centre O. Sur chacune des plages d'inscription obtenues par la subdivision des spires par les secteurs angulaires est enregistrée une ligne de balayage d'une image de télévision, le nombre de lignes du standard étant dans l'exemple choisi égal à 625. Le numéro associé à chaque plage est le rang de la ligne de balayage correspondante.

La lecture de l'enregistrement nécessite de faire tourner le disque 6 autour de centre O selon la flèche Y au moyen d'un mécanisme d'entrainement à vitesse constante et à projeter sur la piste un spot lumineux de lecture T fourni par un système de lecture à déplacement radial dans la direction X. Les éléments constitutifs des mécanismes d'entrainement et du système de lecture ne font pas partie de la présente invention et ne sont pas représentés.

Une image de télévision est entièrement représentée par deux trames de 312,5 lignes chacune. A chaque révolution du disque 6, on a donc lu une image complète. Sur les plages d'inscription situées dans un même secteur angulaire sont inscrites les lignes de même rang correspondant aux images successives. Les rangs sont représentés sur la figure par les numéros: 1, 2, 3, 4... 625.

Dans les pays où la fréquence de courant électrique est de 50 Hz, on a adopté des standards de télévision, par exemple les standards SECAM et PAL, fonctionnant à raison de 50 trames par seconde. Dans les pays où la fréquence de courant électrique est dé 60 Hz, les standards de télévision fonctionnent à la fréquence de 60 trames par seconde. C'est le cas des USA où est adopté le standard NTSC.

Une source importante d'images est le cinéma. La vitesse de défilement d'un film est de 24 images par seconde. La transposition à la télévision dans le cas des standards européens se fait facilement en accélérant très légèrement la vitesse de défilement du film, pour passer de 24 à 25 images par seconde. Il n'en est pas de même pour les standards de fréquence 60 trames par seconde. Dans ce cas, on enregistre alternativement deux trames pour une image, puis trois trames pour la suivante, la troisième trame étant la répétition de la première, et ainsi de suite. En moyenne, on a donc 2,5 trames par image et la vitesse de défilement moyenne obtenue est de 24 images par seconde.

On associe à chaque image un enregistrement de signaux binaires représentant son numéro. Les trames appartenant à une même image portent le même numéro. Ce numéro affecté à chaque image sous forme codée peut être enregistré dans certaines lignes disponibles (par exemple dans un standard à 625 lignes, les lignes 16 et 329) en plus de signaux de service et des signaux de synchronisation.

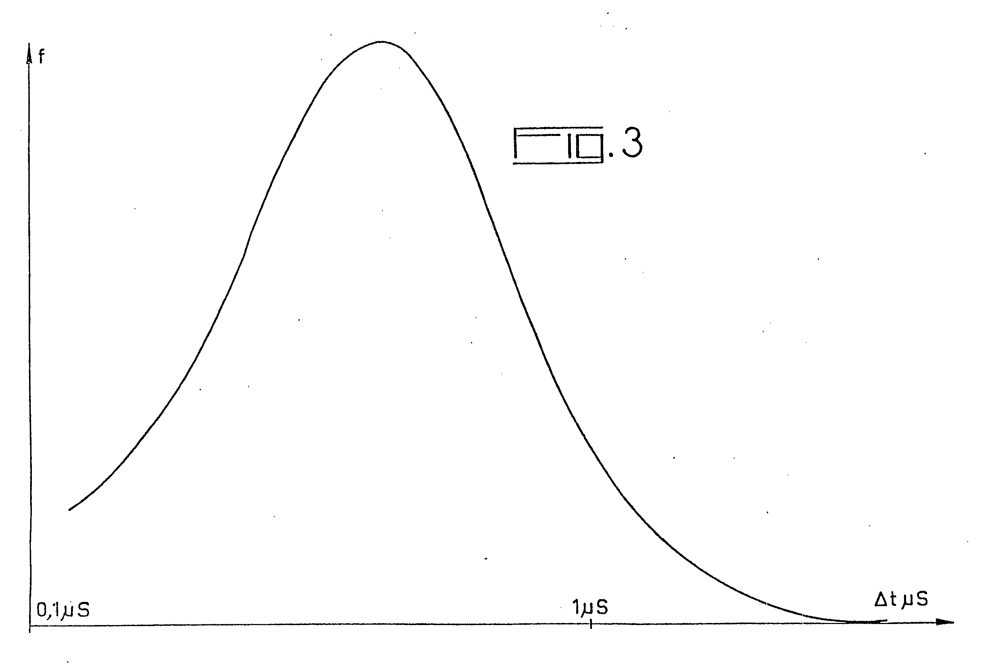

La figure 2(a) illustre la numérotation des trames et des images successives dans le cas d'un standard à 50 trames par seconde. Le codage peut se faire en binaire pur ou selon tout autre système, par exemple en code décimal codé binaire. Les mots binaires de la figure 2(a) ne comportant pour la clarteé de l'explication que trois chiffres. Dans une réalisation concrète, les numéros doivent comporter plus de chiffres significatifs, par exemple cinq chiffres qui permettent d'inscrire des numéros allant de 0 à 99.999. On retrouve la succession régulière de deux trames pour une image.

La figure 2(b) illustre le cas d'un standard à 60 trames par seconde. On retrouve la succession deux trames, trois trames, deux trames et ainsi de suite, pour une image.

L'inscription du numéro d'image se fait pendant une ligne correspondant au retour du balayage vertical, donc invisible sur l'écran, de chacune des trames composant les images de télévision enregistrées, au moyen d'un signal spécifique représentant de façon codée le numéro affecté à l'image dont l'information vidéo suit.

Le numéro est codé en une série d'impulsions de niveau "1" ou "0", selon le code décimal codé binaire. Chaque chiffre étant représenté par quatre impulsions ou bits "1" ou "0", il est nécessaire de transmettre cinq fois quatre bis, c'est à dire vingt bits au minimum, pour chaque numérotation d'image.

Lorsque l'on désire visionner une image prédéterminée parmi toutes celles enregistrées sur un vidéodisque, l'opération se déroule en deux temps: dans un premier temps l'image doit être retrouvée, dans un deuxième temps l'appareil de lecture doit s'arrêter sur cette image. Pour ces deux opérations on utilise l'information contenue dans le numéro d'image.

L'invention va proposer deux dispositions permettant de protéger avec efficacité l'intégrité des informations nécessaires au bon déroulement de ces deux opérations: d'une part la protection globale du numéro d'image permettant la recherche correcte d'une image prédéterminée, d'autre part la protection particulière du bit de poids le plus faible, seul utilisé lors de l'arrêt sur l'image.

Le graphique de la figure 3 représente la courbe donnant la fréquence des altérations (en ordonnée f) en fonction de leur durée (en abscisse Δt), pour un signal enregistré, puis lu à partir d'un support d'enregistrement du type vidéodisque. Il apparait que le plus grand nombre d'altérations dûes à des pertes de signal a une durée moyenne inférieure à une microseconde. Compte tenu de débit binaire utilisé sur le vidéodisque (4,5 M bit par seconde), il est peu fréquent qu'une erreur affecte plus de deux bits consécutifs. Dans ces conditions, en répétant trois fois de suite le train bits en série représentant le numéro d'image, il devient peu probable qu'une perte de signal puisse affecter les mêmes bits de deux trains consécutifs. Les études statistiques indiquent pur un disque de qualité moyenne, dix à vingt pertes de signal par image complète de télévision. La durée moyenne séparant deux pertes de signal est donc très supérieure à la durée séparant deux ou même trois trains de bits consécutifs.

Une autre caractéristique particulière des pertes de signal sur le vidéodisque, caractéristique liée au type de modulation et de gravure utilisé, est que la majorité des erreurs équivalent à une perte brève du signal haute fréquence de lecture et sont donc interprétées par le démodulateur comme une fréquence très basse de ce signal, donnant à la sortie du démodulateur un signal vidéo allant vers l'infra noir.

Ces infra noirs vont être interprétés comme des "0" par le décodeur. Ce type de défaut ne peut donc affecter que les bits se trouvant au niveau "1". Il découle de cette constatation qu'il est intéressant de transmettre le second train de bits en série, représentant le numéro d'image, inversé par rapport au précédent et au suivant. En effet les bits présentant un niveau logique "1" dans le premier train de bits, présenteront un niveau logique "0" dans le second et à nouveau "1" dans le troisième et ainsi de suite. Il s'en suit que dans le cas où deux pertes de signaux du type qui vient d'être décrit affecteraient les mêmes bits de deux trains de bits consécutifs, l'un au moins de ces trains ne serait pas affecté. Ceci constitue un premier aspect de l'invention.

La figure 5 illustre cet aspect. Chaque mot binaire représentant un numéro d'image comprend 20 bits numérotés 1 à 20. Ces mots sont répétés trois fois, à savoir $M_1$, $M_2$ et $M_3$. Les bits 1 à 20 mot $M_1$ et 1" à 20" du mot $M_3$ sont enregistrés selon leur valeur vraie. Les bits 1' à 20' du mot $M_2$ sont inversés. Par convention, le bit 1 est le bit de plus fort poids et le bit 20 est le bit de plus faible poids; et le terme "vrai" est utilisé par opposition au terme "inversé".

Cette protection est efficace dans près de 99% des cas, ce qui est très suffisant en ce qui concerne le numéro d'image en son entier, celui ci étant répété au moins deux fois par images (deux ou trois trames par image selon les standards). Il y a donc pratiquement toujours, pour une image, au moins une des trames présentant un numéro correct.

Pour un disque comportant 45.000 images, il reste cependant quelques images ou même quelques dizaines d'images (par exemple si le disque est abimé ou fortement empoussiéré), dont les numéros ne sont pas identiques pour les deux (ou trois) trames que comprend cette image. Compte-tenu de la probabilité pour que l'erreur affecte le bit de poids le plus faible du numéro erroné (1/20ème), il reste quelques images par disque sur lesquelles il est impossible de s'arrêter en utilisant le dispositif décrit dans le demande de brevet français précitée. Ceci ne présente pas d'inconvénients lorsqu'il s'agit d'une séquence en mouvement, chaque image étant peu différente de la suivante ou de la précédente. Cependant, lorsqu'il s'agit d'une bibliothèque d'images, toutes différentes les unes des autres, il est alors impossible de visionner certaines d'entres elles. Ceci peut se comparer à un livre dont certaines pages seraient détruites.

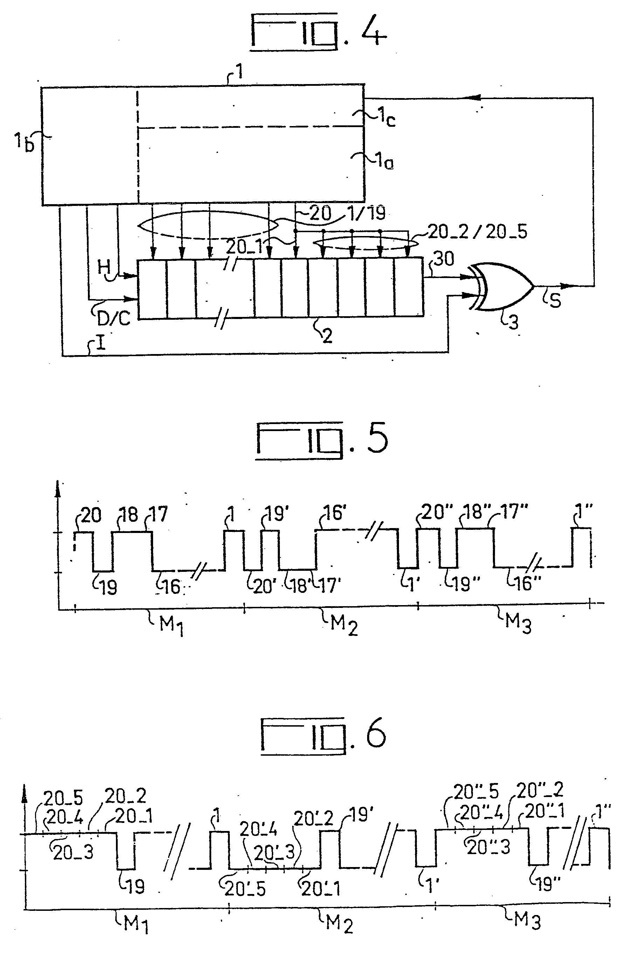

Selon un second aspect de l'invention, le bit de poids le plus faible est répété quatre fois (en plus du bit normal) dans chacun des trains de bits composant un numéro d'image. Trois trains de 24 bits pour chaque numéro sont donc enregistrés, au lieu de trois trains de 20 bits. La figure 6 illustre la combinaison des deux aspects de l'invention. Les bits 20-2 à 20-5 représentent la répétition du bit normal 20-1. Les bits répétés du mot $M_2$ subissent la même transformation que le bit normal: ces bits sont donc inversés.

La figure 4 décrit un dispositif permettant de mettre en oeuvre le procédé de codage selon l'invention. La référence 1 représente les circuits habituels d'un enregistreur de vidéodisque. Cet enregistreur comprend des circuits de synchronisation et d'horloge 1b et des circuits d'interface 1a entre le dispositif de codage de numéro d'image selon l'invention et les circuits généraux d'enregistrement 1c de l'enregistreur. Ces circuits sont communs aux enregistreurs de l'art antérieur et sont bien connus de l'homme de métier. Ils ne seront pas décrits plus avant. Lors de l'enregistrement d'une image de télévision, les bits représentant le numéro de cette image sont présents sur les sorties 1 à 20 du circuit d'interface 1a. Ces bits sont transmis aux entrées 1 à 19 et 20-1 d'un convertisseur parallèlesérie 2. En outre, le bit 20 est répété quatre fois pour être transmis à quatre entrées supplémentaires 20-2 à 20-5 du convertisseur 2. La répétition de ce bit peut s'effectuer simplement par un "OU" cablé comme indiqué sur la figure 4. Le convertisseur parallèle-série peut être constitué par un registre à décalage à 24 entrées parallèles et une sortie série 30. Ce registre reçoit en outre des signaux d'horloge H de décalage et un signal de commande D/C permettant le chargement initial des bits 1 à 19 et 20-1 à 20-5, avant décalage. La sortie série 30 est transmise à l'une des entrées d'un "OU-EXCLUSIF" 3. La seconde entrée de cette porte logique "OU-EXCLUSIF" 3 recoit un signal binaire de commande: 1. Lorsque ce signal de commande I est bas, c'est à dire représente un "0" logique, les bits se présentant sur la sortie 30 du registre à décalage 2 seront transmis inchangés sur la sortie S du "OU-EXCLUSIF" 3. Au contraire, lorsque le signal I est au "1" logique, ces bits seront inversés. Les bits 1 à 20-5 vont être chargés à trois reprises dans le registre 2 et transmis en série sur la sortie S, alternativement en valeur "vraie" (figure 6: $M_1$ et $M_3$) et sous forme inversée ($M_3$). Ces bits sont ensuite transmis au circuit 1c pour être enregistrés sous toutes formes appropriées sur un vidéodisque.

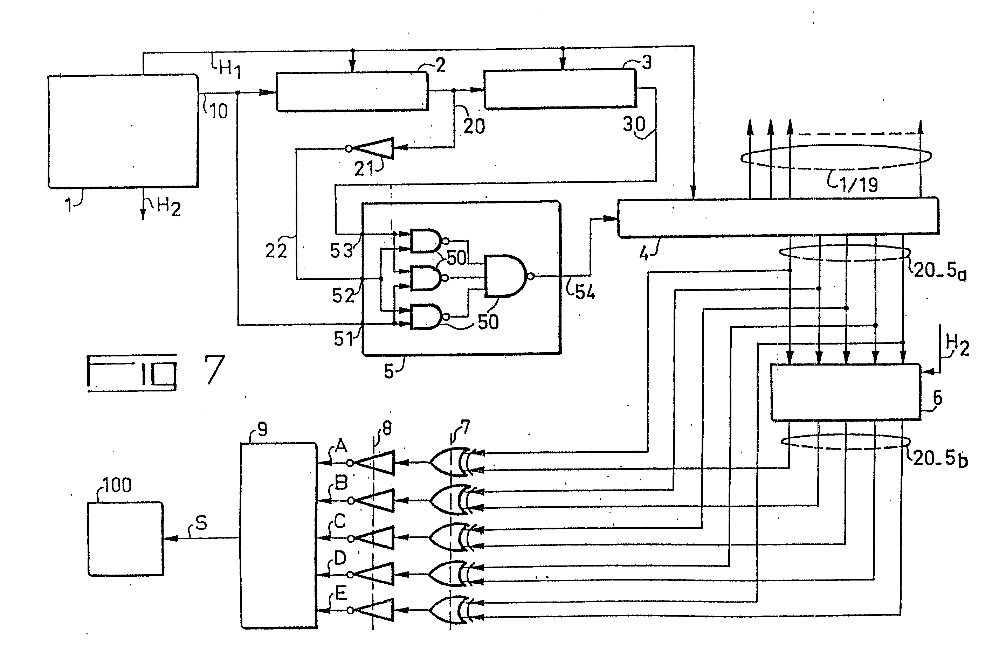

La figure 7 illustre un dispositif de lecture des signaux binaires de numérotation d'image selon l'invention. La référence 1 représente les circuits habituels d'un lecteur de vidéodisque ainsi que les circuits d'horloge et de synchronisation associés fournissant notamment les signaux $H_1$ et $H_2$. Les trains de bits répétés selon le procédé de l'invention se présentent en série sur la liaison 10 après lecture. Ces bits sont appliqués à l'entrée d'un registre à décalage 2 d'une part et à l'entrée 51 d'un comparateur 5 d'autre part. Les bits sortant du registre 2 sont appliqués à leur tour à un registre à décalage 3 d'une part et d'autre part, via la liaison 20, l'inverseur 21 et la liaison 22, à l'entrée 52 du comparateur 5. Les bits sortant du registre à décalage 3 sont appliqués via la liaison 30 à l'entrée 53 du comparateur 5. Des impulsions d'horloge $H_1$ provenant des circuits de décodage du lecteur 1, synchrones avec les bits lus, sont appliquées aux entrées de commande de décalage des registres 2 et 3. Ces deux registres comportent chacun 24 étages. La simultanéité des trois mots binaires $M_1$, $M_2$ et $M_3$ est réalisée à l'aide des registres 2 et 3. Les bits correspondants de ces trois trains binaires, représentant la répétition des bits 1, et 1' (après inversion) et 1'', sont donc transmis simultanément aux trois entrées 51 à 53 du circuit de comparaison 5. Ce circuit de comparaison 5 comprend quatre portes logiques "NON-ET", interconnectées comme indiqué sur la figure 7, de manière à réaliser un vote majoritaire 2/3. Les bits résultant de ce vote sont transmis via la liaison 54 à un registre à décalage 4, à entrée série et sorties parallèles. Ce registre 4 reçoit également les impulsions d'horloge $H_1$, nécessaires au décalage. Il comporte 24 étages et comprend les sorties référencées 1 à 19, ainsi que cinq sorties référencées globalement 20-5a représentant les bits de plus faible poids répétés. Ces dernières sorties sont transmises à une mémoire temporaire 6 à cinq entrées parallèles et cinq sorties parallèles, référencées 20-5b. Cette mémoire reçoit un signal d'autorisation de chargement $H_2$, présent lorsque le vote majoritaire effectué par le circuit 5 a été complété et les bits résultant de ce vote chargés dans le registre à décalage 4, c'est à dire après la 72 ème impulsion d'horloge $H_1$. La fréquence de récurrence du signla $H_2$ est égale à la fréquence de trame. A la trame suivante le même processus va se produire lors de la lecture du numéro d'image associé à cette trame. Les cinq bits répétés du bit de poids le plus faible sont alors comparés aux cinq bits présents à la sortie de la mémoire 6, cette comparaison est effectuée par les cinq portes logiques "OU-EXCLUSIF" 7. Les cinq bits résultant de cette comparaison sont inversés par les inverseurs 8 et sont transmis aux entrées A à E d'un circuit de comparaison 9. Ce circuit effectue un vote majoritaire 3/5. La sortie S de ce circuit représente donc la fonction:

$$S = A.B.C. + A.B.D. + A.B.E. + A.C.D. + A.C.E. + A.D.E. + B.C.D + B.C.E. + B.D.E. + C.D.E.$$

La sortie S sera au niveau logique "1" si au moins trois des entrées A à E sont au niveau "1". Ce niveau "1" présent sur la sortie S indique que les deux trames que viennent d'être lues appartiennent à la même image et qu'il y a lieu d'autoriser le saut de piste. La sortie S est transmise à l'entrée de commande d'un système générateur d'impulsions de saut de piste 100. Les bits 1 à 19 et un des bits de plus faible poids 20 sont utilisés lors de la phase de recherche d'une image portant un un numéro prédéterminé.

Le procédé de codage selon l'invention permet une très bonne protection des signaux binaires de numérotation d'images, tout en ne mettant en oeuvre que peu de matériel supplémentaire. Ce matériel est généralement bon marché, il se compose essentiellement de quelques circuits intégrés pouvant être choisis parmi ceux disponibles dans le commerce. A titre d'exemple non limitatif les circuits intégrés de type indiqué ci-dessous peuvent être choisis pour réaliser les circuits des figures 4 et 7:—

| | | |
|---|---|---|
| — Registre à décalage à entrées parallèles et sortie série (fig. 4: 2) | 3 circuits SN 64 165 N | |
| — Portes "OU-EXCLUSIF" (fig. 4:3 et fig. 7:7) | circuits SN 74 86 N | |
| — Inverseurs (fig. 7: 8 et 21) | circuits SN 74 04 N | FIRME TEXAS INSTRUMENT |
| — Portes "NON-ET" (fig. 7: 50) | circuits SN 7400—7410 | |
| — Registres à décalage à entrée série et sortie série ou parallèle (fig. 7: 2, 3 et 4) | 3 circuits SN 74 164 N (pour chaque registre) | |

| — Mémoire temporaire (fig. 7: 6) | circuit SN 74 378 N | FIRME TEXAS INSTRUMENT |
|---|---|---|
| — Circuit comparateur (fig. 7: 9) | circuit MC 4 530 | FIRME MOTOROLA |

L'invention n'est pas limitée aux réalisations qui viennent d'être décrites et qui n'ont été données qu'à titre illustratif. Bien qu'étant plus particuliè-rement étudié pour satisfaire aux exigences d'un système à vidéodisque, le procédé de codage selon l'invention peut être utilisé pour tout autre support d'enregistrement. Les moyens de lecture/écriture peuvent être indifféremment optiques ou magnétiques.

**Revendications**

1. Procédé de codage des signaux binaires de numérotation d'images destinées à être emmagasinées sur un support d'enregistrement, les signaux binaires se présentant sous la forme d'un train de bits en série (1/20); procédé visant à prémunir les signaux binaires contre les altérations rencontrées au cours du processus de transcription, caractérisé en ce qu'il consiste à répéter le bit de poids le plus faible (20) plusieurs fois et réémettre le train redondant de bits en série ainsi obtenu à plusieurs reprises (1/20-5, 1'/20'-5, 1"/20"-5); les bits d'une partie de ces trains redondants (1'/20'-5) étant en outre inversés.

2. Procédé selon la revendication 1, caractérisé en ce que les trains redondants de bits en série sont émis trois fois; les bits des premier (1/20-5) et troisième (1"/20"-5) trains restant inchangés, les bits du second train (1'/20'-5) étant inversés.

3. Procédé selon l'une quelconque des revendications 1 ou 2, caractérisé en ce que le bit de poids le plus faible de chacun des trains de bits en série est répété quatre fois (20-2/20-5).

4. Dispositif lecteur de signaux binaires de numérotation d'images, codés selon le procédé de l'une quelconque des revendications 1 à 3; dispositif comprenant des organes de lecture de signaux emmagasinés sur un support d'enregistrement et des moyens générateurs de signaux de synchronisation et d'horloge (1); dispositif caractérisé en ce qu'il comprend des premiers moyens de mémorisation (2, 3) pour l'enregistrement des trains redondants de bits en série successivement lus, des moyens d'inversion (21) d'une partie prédéterminée des signaux enregistrés dans les premiers moyens de mémorisation, des premiers moyens de comparaison (5) réalisant un premier vot majoritaire reliés sélectivement à la sortie des premiers moyens de mémorisation (30) et à la sortie des moyens d'inversion (22) ainsi qu'a la sortie des organes de lecture (10), des moyens combinés de mémorisation et de conversion série-parallèle (4) destinés à l'enregistrement complet d'un train redondant de bits, résultat du vote majoritaire.

5. Dispositif selon la revendication 4, caractérisé en ce qu'il comporte en outre des seconds moyens de mémorisation (6) pour l'enregistrement temporaire de la valeur répétée du bit de plus faible poids du train de bits enregistrée dans les moyens combinés de mémorisation et de conversion série-parallèle (4), des seconds moyens de comparaison (7) comprenant deux séries d'entrées, la première série d'entrées étant reliée aux sorties des seconds moyens de mémorisation et la seconde série d'entrées étant reliée aux sorties des moyens combinés de mémorisation et de conversion série-parallèle (4) répétant le bit de poids le plus faible; et des troisièmes moyens de comparaison (9) recevant les signaux présents sur les sorties des seconds moyens de comparaison pour réaliser un second vote majoritaire.

6. Dispositif selon la revendication 4, caractérisé en ce que les premiers moyens de mémorisation comprennent un premier registre à décalage (2) de capacité égale à 24 bits recevant sur son entrée les signaux lus par les organes de lecture (1) et une deuxième registre à décalage (3) connecté en cascade, de même capacité, et en ce que les premiers moyens de comparaison sont constitués par un circuit logique de vote majoritaire 2/3 (5) à trois entrées (51, 52, 53), la troisième entrée (53) étant reliée à la sortie du second registre à décalage (3), la deuxième entrée (52), via un inverseur (21), à la sortie du premier registre à décalage (2) et la première entrée (51) à l'entrée de ce registre.

7. Dispositif selon la revendication 4, caractérisé en ce que les moyens combinés de mémorisation et de conversion série-parallèle sont constitués par un registre à décalage (4) à entrée (54) série et sorties parallèles (1/19, 20-5a) de capacité égale à 24 bits.

8. Dispositif selon la revendication 5, caractérisé en ce que les seconds moyens de mémorisation sont constitués par une mémoire statique (6) à entrées et sorties parallèles de capacité égale à cinq bits, les deuxièmes moyens de comparaison sont constitués par des circuits logiques "OU-EXCLUSIF" (7) à deux entrées, et en ce que les troisièmes moyens de comparaison sont constitués par un circuit de vote majoritaire 3/5 (9) à cinq entrées (A—E).

9. Appareil de diffusion de signaux audiovisuels inscrits sur un support d'enregistrement selon une piste formant un enroulement dont les spires comportent chacune deux trames appartenant à une même image ou à des images contiguës comprenant un dispositif lecteur de signaux binaires de numérotation d'images selon l'une quelconque des revendications 4 à 8 ainsi qu'un système générateur d'impulsions de commande de saut de piste (100); appareil caractérisé en ce que le signal présent sur la sortie (5) des troisièmes moyens de comparaison (9) du dispositif est transmis au système générateur d'impulsions de commande de saut de piste, autorisant la délivrance d'une impulsion de commande de saut de piste, transmises aux organes de lecture, lorsque deux trames contiguës appartiennent à une même image.

10. Appareil selon la revendication 9, caractérisé en ce que les seconds moyens de mémorisation (6) du dispositif lecteur de signaux binaires de numérotation d'images conservent les données en mémoire pendant la durée d'une trame.

**Patentansprüche**

1. Verfahren zum Verschlüsseln binärer auf einem Aufnahmeträger zu speichernder Bildnumerierungssignale, die in Form einer Ziffer serienreihe (1/20) anfallen, wobei das Verfahren die binären Signale gegen während der Übertragung auftretende Entstellungen schützen soll, dadurch gekennzeichnet, dass die niedrige Ziffer (20) mehrere Male wiederholt wird und die somit erhaltene überflüssige Ziffernserienreihe mehrere Male erneut gegeben wird (1/20-5, 1'/20'-5, 1"/20"-5), wobei ferner die Ziffern eines Teils dieser überflüssigen Reihen (1'/20'-5) umgekehrt werden.

2. Verfahren nach Anspruch 1, dadurch gekennzeichnet, dass die überflüssigen Ziffernserienreihen dreimal gegeben werden, wobei die Ziffern der ersten Reihe (1/20-5) und der dritten Reihe (1"/20"-5) unverändert bleiben und die Ziffern der zweiten Reihe (1'/20'-5) umgekehrt werden.

3. Verfahren nach Anspruch 1 oder 2, dadurch gekennzeichnet, dass die niedrigere jeder Ziffernserienreihe viermal wiederholt wird (20-2/20-5).

4. Lesevorrichtung für nach dem Verfahren gemäss der Ansprüche 1 bis 3 verschlüsselte binäre Bildnumerierungssignale, mit Leseorgane zum Lesen von auf einem Aufnahmeträger gespeicherten Signalen, sowie mit Mitteln zum Erzeugen von Synchronisierungs= und Zeitsignalen (1), dadurch gekennzeichnet, dass sie erste Speichermittel (2,3) zur Aufnahme der nacheinander gelesenen überflüssigen Serienziffern und Umkehrmittel (21) zum Umkehren eines vorbestimmten Teils der in der ersten Speichermitteln gespeicherten Signale aufweist, sowie erste Vergleichsmittel (5) für eine erste Mehrheitswahl, die wahlweise an den Ausgang der ersten Speichermittel (30) bzw. an den Ausgang der umkehrmittel (22) bzw. an den Ausgang der Leseorgane (10) angeschlossen werden, und ferner kombinierte Reihen-parallel-Umwandlungs= und Speichermittel (4) zur vollständigen Aufnahme einer überflussigen von der Mehreitswahl herrührenden Ziffernreihe.

5. Vorrichtung nach Anspruch 4, dadurch gekennzeichnet, dass sie ferner zweite Speichermittel (6) zur zeitweiligen Aufnahme des wiederholten Wertes der niedrigeren Ziffer der durch die kombinierten Reihen-parallel-Umwandlungs= und Speichermittel (4) aufgenommenen Ziffernreihe aufweist, sowie zweite Vergleichsmittel (7) mit zwei Eingangsreihen, wobei die erste Eingangsreihe an die Ausgänge der zweiten Speichermittel und die zweite Eingangsreihe an die Ausgänge der kombinierten Reihen-parallel-Umwandlungs= und Speichermittel (4) angeschlossen ist, die die niedrigere Ziffer wiederholen, und wobei die Vorrichtung dritte Vergleichungsmittel (9) aufweist, welche die an den Ausgängen der zweiten Vergleichungsmittel auftretenden Signale empfangen, um eine zeite Mehrheitswahl durchzuführen.

6. Vorrichtung nach Anspruch 4, dadurch gekennzeichnet, dass die ersten Speichermittel ein erstes Versetzungsregister (2) mit einer Kapazität von 24 Ziffern aufweisen, an dessen Eingang die von den Leseorganen (1) gelesenen Signale angelegt werden, sowie eine die gleiche Kapazität besitzendes Versetzungsregister (3) in Kaskadenschaltung, und dass die ersten Vergleichungsmittel aus einem logischen 2/3-Mehrheitswahlschaltkreis (5) mit drei Eingängen (51, 52, 53) bestehen, wobei der dritte Eingang (53) an den Ausgang des zweiten Versetzungsregisters (3), der zweite Eingang (52) über einer Wender (21) an den Ausgang des ersten Umkehrregisters (2) und der erste Eingang (51) an den Eingang dieses Registers angeschlossen ist.

7. Vorrichtung nach Anspruch 4, dadurch gekennzeichnet, dass die kombinierten Reihen-parallel-Umwandlungs= und Speichermittel aus einem Versetzungsregister (4) mit Serieneingang (54) und Parallelausgängen (1/19, 20-5a) bestehen, welches eine Kapazität von 24 Ziffern besitzt.

8. Vorrichtung nach Anspruch 5, dadurch gekennzeichnet, dass die zweiten Speichermittel aus einem statischen Speicher (6) mit parallelen Eingängen und Ausgängen und einer Kapazität von fünf Ziffern bestehen, während die zweiten Vergleichsmittel aus logischen "ODER-AUSSCHLIESSLICH"=Schaltkreisen (7) mit zwei Eingängen bestehen, und dass die dritten Vergleichsmittel aus einem 3/5-Mehrheitswahlschaltkreis (9) mit fünf Eingängen (A—E) bestehen.

9. Gerät zum Senden von Audio-Video-Signalen, die auf einem Aufnahme-träger längs einer Wicklungsförmigen Spur aufgezeichnet sind, deren Spiralen je zwei Raster aufweisen, die einem einzigen Bild bzw. zwei benachbarten Bildern zugeordnet sind, mit einer Vorrichtung zum Lesen von binären Bildnumerierungssignalen nach einem der Ansprüche 4 bis 8, sowie mit einem Spursprung-Steuerpulsgeber (100), dadurch gekennzeichnet, dass das am Ausgang (5) der dritten Vergleichungsmittel (9), der Vorrichtung auftretende Signal an den Spursprungsteuerpulsgeber angelegt wird, derart, dass ein Sprursprungspuls erzeugt wird, der an die Leseorgane übertragen wird, wenn zwei benachbarte Raster einem einzigen Bild zugeordnet sind.

10. Gerät nach Anspruch 9, dadurch gekennzeichnet, dass die zweiten Speichermittel (6) der Lesevorrichtung für die binären Bildnumerierungssignale die Daten währen der Dauer eines Rasters speichern.

## Claims

1. Method of coding binary image numbering signals adapted to be stored on a recording support, said binary signals having the form of a row of series bits (1/20), which method is aimed at protecting the binary signals against the alterations encountered during the transcription process, characterized in that it consists in repeating the bit of lower weight (20) a plurality of times and re-emitting several times the redundant row of series bits thus obtained (1/20-5, 1'20'-5, 1"/20"-5), the bits of a part of said redundant rows (1'/20'-5) furthermore reversed.

2. Method according to claim 1, characterized in that the redundant rows of series bits are emitted three times, the bits of the first row (1/20-5) and the bits of the third row (1"/20"-5) remaining unchanged, while the bits of the second row (1'/20'-5) are reversed.

3. Method according to any one of claims 1 or 2, characterized in that the bit of the smaller weight of each row of series is repeated four times (20-2/20-5).

4. Device for reading binary image numbering signals coded according to the method of any one of claims 1 to 3, comprising reading organs for reading signals stored on a recording support and synchronizing and clock signal generating means (1), characterized in that it comprises first memorizing means (2,3) for recording successively read redundant rows of series bits, reversing means (21) for reversing a predetermined part of the signals recorded by the first memorizing means, first comparing means (5) effecting a first majority vote and connected selectively to the output of the first memorizing means (30) and to the output of the reversing means (22), as well as to the output of the reading organs (10), and combined memorizing and series-parallel reversing means (4) adapted to effect complete recording of a redundant row of bits resulting from the majority vote.

5. Device according to claim 4, characterized in that it further comprises second memorizing means (6) for temporarily recording the value of the repeated bit of lower weight of the row of bits recorded by the combined memorizing and series-parallel reversing means (4), second comparing means (7) comprising two series of inputs, the first input series being connected to the outputs of the second memorizing means, and the second input series being connected to the outputs of the combined memorizing and series-parallel means (4) repeating the bit of the lowest weight, and third comparing means (9) receiving the signals appearing at the outputs of the second comparing means for effecting a second majority vote.

6. Device according to claim 4, characterized in that the first memorizing means comprise a first shift register (2) having a capacity of 24 bits and receiving at its input the signals read by the reading organs (1), and a second shift register (3) connected in cascade and having the same capacity, and in that the first comparing means are constituted by a logical majority vote circuit 2/3 (5) having three inputs (51, 52, 53), the third input (53) being connected to the output of the second shift register (3), the second input (52) being connected through a reverser (21) to the output of the first shift register (2) and the first input (51) being connected to the input of said register.

7. Device according to claim 4, characterized in that the combined memorizing and series-parallel reversing means are constituted by a shift register (4) having a series input (54) and parallel outputs (1/19, 20-5a), the capacity of said register being equal to 24 bits.

8. Device according to claim 5, characterized in that the second memorizing means are constituted by a static memory (6) having parallel inputs and outputs and a capacity of five bits, the second comparing means being constituted by logical "OR-EXCLUSIVE" circuits (7) having two inputs, and in that the third comparing means are constituted by a majority vote circuit 2/3 (9) having five inputs (A—E).

9. Apparatus for emitting audio-visual signals recorded on a recording support along a coiled path the turns of which have each two canvases belonging to one single image or to adjacent images, comprising a reading device for reading binary image numbering signals according to any one of claims 4 to 8, and a path skipping control pulse generating system (100), characterized in that the signal appearing at the output (5) of the third comparing means (9) of the device is transmitted to the path skipping control pulse generating system, so as to authorize the generation of a path skipping control pulse transmitted to the reading organs when two adjacent canveses belong to one single image.

10. Apparatus according to claim 9, characterized in that the second memorizing means (6) of the binary image numbering signal reading device memorize the data during the duration of one canvas.

FIG. 1

FIG. 2

(a)

| 000 | 000 | 001 | 001 | 010 | 010 | 011 | 011 | 100 |

(b)

| 000 | 000 | 001 | 001 | 001 | 010 | 010 | 011 | 011 |

FIG.3

0019503

# FIG. 4

# FIG. 5

# FIG. 6

0 019 503